# EUROPÄISCHE PATENTSCHRIFT

(11) **EP 1 240 938 B1**
(45) Veröffentlichungstag und Bekanntmachung des Hinweises auf die Patenterteilung: **06.05.2009**
(21) Anmeldenummer: 02004573.8
(22) Anmeldetag: 28.02.2002
(51) Int. Cl.: B01D 61/12, B01D 61/02, C02F 1/44

(54) **Umkehrosmose-Anlage**
Reverse osmosis plant
Installation d'osmose inverse

(30) Priorität: 14.03.2001 DE 10112719; 14.03.2001 DE 10112725; 14.03.2001 DE 10112730
(43) Veröffentlichungstag der Anmeldung: 18.09.2002
(60) Teilanmeldung: 08166114.2
(73) Patentinhaber: Michelbach, Ludwig, 90513 Zirndorf (DE)
(72) Erfinder: Michelbach, Ludwig, 90513 Zirndorf (DE)
(74) Vertreter: Zech, Stefan Markus

(56) Entgegenhaltungen:
- DE-A- 2 444 740
- DE-A- 19 748 997
- JP-A- 01 011 610
- JP-A- 10 137 754
- JP-A- 60 007 989
- DATABASE WPI Week 199601 Derwent Publications Ltd., London, GB; AN 1996-006388 XP002203372 & JP 07 284637 A (TOSHIBA KK), 31. Oktober 1995 (1995-10-31)
- PATENT ABSTRACTS OF JAPAN vol. 0184, no. 00 (C-1230), 26. Juli 1994 (1994-07-26) & JP 06 114372 A (MITSUBISHI HEAVY IND LTD), 26. April 1994 (1994-04-26)
- PATENT ABSTRACTS OF JAPAN vol. 0130, no. 84 (C-572), 27. Februar 1989 (1989-02-27) & JP 63 270592 A (EBARA CORP), 8. November 1988 (1988-11-08)
- PATENT ABSTRACTS OF JAPAN vol. 1998, no. 03, 27. Februar 1998 (1998-02-27) & JP 09 299944 A (JAPAN ORGANO CO LTD), 25. November 1997 (1997-11-25)
- PATENT ABSTRACTS OF JAPAN vol. 0154, no. 31 (C-0881), 5. November 1991 (1991-11-05) & JP 03 181386 A (CHIUEI:KK), 7. August 1991 (1991-08-07)

## Beschreibung

Die Erfindung betrifft eine Umkehrosmose-Anlage gemäß dem Oberbegriff der Patentansprüche 1 und 2.

Durch ein Umkehrosmose-Verfahren kann Wasser nahezu vollständig entsalzt werden. Der Vorteil dieses Verfahrens liegt vor allem in der geringen Umweltbelastung. Für dieses Verfahren sind keinerlei Chemikalien erforderlich.

Das auf diese Weise entsalzte Wasser wird insbesondere in der Industrie, Pharmazie und in Krankenhäusern eingesetzt. Auch für die Luftbefeuchtung in Lüftungs- und Klimaanlagen wird oftmals ein auf diese Weise entsalztes Wasser verwendet. Weiterhin können Umkehrosmose-Anlagen für die Aufbereitung von Meerwasser verwendet werden. Meerwasser ist wegen des hohen Salzgehalts als Trinkwasser ungeeignet. Mit Hilfe einer Umkehrosmose-Anlage kann der Salzgehalt von Meerwasser soweit reduziert werden, dass es als Trinkwasser geeignet ist. Solche Anlagen werden insbesondere in Küstenregionen mit wenig oder keinem Süßwasservorkommen benötigt.

Aus dem Stand der Technik ist eine Umkehrosmose-Anlage bekannt, der eine Enthärtungsanlage vorgeschaltet ist. In dieser Enthärtungsanlage wird Rohwasser auf weniger als 1°dH entkalkt. Der Ausgang der Enthärtungsanlage ist mit dem Eingang der Umkehrosmose-Anlage gekoppelt. Am Eingang weist die Umkehrosmose-Anlage eine Pumpe auf, die das enthärtete Wasser mit einem Druck von etwa 1 bar bis 20 bar durch Module preßt. In den Modulen findet das eigentliche Umkehrosmose-Verfahren statt, indem das Wasser mit Druck gegen halbdurchlässige Membrane gepreßt wird. Dabei werden Salze und/oder Mineralien ausgefiltert, wobei sich das Rohwasser in ein Permeat (Diluat) und ein Konzentrat aufspaltet . Das Permeat (Diluat) ist als besonders salzarmes Wasser weiter verwendbar. Das Konzentrat ist ein Abfallprodukt und wird verworfen. Üblicherweise produziert ein Modul in etwa 75% Permeat (Diluat) und 25% Konzentrat. Der Pumpendruck sowie die Permeat- und Konzentratmenge sind manuell einstellbar. Das Permeat wird in einem drucklosen Behälter gespeichert und von dort an einen Endverbraucher weitergepumpt.

Diese herkömmliche Umkehrosmose-Anlage hat den Nachteil, daß das Wasser in dem Behälter aufkeimen kann. Dies ist insbesondere darauf zurückzuführen, daß der Behälter niemals ganz dicht ist und das Wasser oftmals längere Zeit in dem Behälter verbleibt. Durch eine Erwärmung des Wassers im Behälter, insbesondere im Sommer, wird das Aufkeimen zusätzlich gefördert. Zur Verhinderung der Verkeimung werden UV-Lampen, Chemikalien oder zusätzliche Leitungen verwendet, was jedoch den Energieaufwand, die Umweltbelastung und den konstruktiven Aufwand erhöht.

Weiterhin hat die herkömmliche Umkehrosmose-Anlage einen verhältnismäßig hohen Platzbedarf. Schließlich hat die manuelle Einstellung wichtiger Größen unerwünschte Ungenauigkeiten zur Folge.

Gemäß der DE 19748997, der JP 60007989 und der JP-10137754 Kann unter Verwendung einer Feeddruckregelung in Abhängigkeit des Diluatdrcuks eine Diluat zwischen speicherung vermieden werden.

Schließlich haben herkömmliche Umkehrosmose-Anlagen den Nachteil, dass der Salzgehalt am Ausgang der Anlage nicht regelbar ist.

Es ist Aufgabe der Erfindung, eine Umkehrosmose-Anlage bereit zu stellen, die die oben genannten Nachteile überwindet.

Diese Aufgabe wird durch den Gegenstand gemäß Patentanspruch 1 und 2 gelöst.

Erfindungsgemäß ist vorgesehen, daß an der Pumpe oder zwischen Pumpe und Rohwassereingang eine Druckregelungseinrichtung vorgesehen ist, die einen Rohwasserdruck P_{R} in Abhängigkeit von einem vorbestimmten Diluatdruck P_{D} am Diluatausgang einstellt. Durch diese Maßnahme wird in wenigstens einem Modul lediglich soviel Rohwasser zugeführt, wie eine entsprechende Menge an salzarmen Diluat am Diluatausgang benötigt wird. Es wird also kein überschüssiges Diluat produziert. Deshalb ist auch kein Behälter erforderlich, in dem das Diluat aufkeimen könnte. Ebensowenig ist eine Druckerhöhungspumpe erforderlich, da der benötigte Druck bereits von der Pumpe, die dem Modul vorgeschaltet ist, bereitgestellt wird. Durch das Wegfallen des Behälters und der Druckerhöhungspumpe verringert sich auch der konstruktive Aufwand der gesamten Anlage.

Weiterhin umfasst die Umkehrosmose-Anlage eine Überbrückungsleitung mit einem Regelventil, welche zwischen dem Ausgang der Pumpe und einem Diluatleitsystem zum Zuführen eines Teiles des Rohwassers direkt an das Diluatleitsystem entsprechend eines vom Endverbraucher tolerierten Salzgehaltes geschaltet ist, und dem Diluatausgang und der Überbrückungsleitung ein Diluatabfluss mit zugeordnetern Leitwertsensor nachgeschaltet ist, wobei das Regelventil in Abhängigkeit von einem vom Leitwertsensor erfassten Leitwert gesteuert ist.

Insbesondere kann vorgesehen sein, daß die Druckregelungseinrichtung einen Frequenzumwandler zur Ansteuerung der Pumpe umfaßt derart, daß die Pumpe über einen kontinuierlichen Druckbereich insbesondere von 10 - 80 bar einstellbar ist. Die Verwendung des Frequenzumwandlers ermöglicht eine verlustlose Regelung. Der Pumpe wird nur diejenige Energie zugeführt, die tatsächlich benötigt wird. Es wird keine überschüssige Energie in Wärme umgewandelt.

Weiterhin kann vorgesehen sein, daß zur Erfassung des Diluatdruckes P_{D} ein Drucksensor an dem am Diluatausgang angeordneten Diluat-Leitungssystem vorgesehen ist. Durch eine derartige Plazierung des Drucksensors ist eine besonders genaue Druckerfassung möglich. Insbesondere in dem Diluat-Leitungssystem ist die Strömung im wesentlichen laminar, so daß Meßfehler sehr gering bleiben.

Außerdem kann noch vorgesehen sein, daß zur Steuerung der Pumpe mittels der Druckregelungseinrichtung ergänzend zum Diluatdruck P_{D} der am Rohwassereingang vorhandene Rohwasserdruck P_{R} berücksichtigt wird. Dadurch kann die Druckregelungseinrichtung auch auf Schwankungen des Rohwasserdruckes P_{R} reagieren. Auf diese Weise wird der Druck am Ausgang der Pumpe besonders genau eingestellt.

Schließlich kann eine Konzentratrückführüng vorgesehen sein, um das am Konzentratausgang austretende Konzentrat ganz oder teilweise erneut durch das Umkehrosmose-Modul zu führen. Durch diese Maßnahme werden die Regelungsmöglichkeiten der gesamten Anlage erhöht. Insbesondere kann der elektrische Leitwert von Diluat und Konzentrat entsprechend den Anforderungen eingestellt werden.

Dabei kann vorgesehen sein, daß die Konzentratrückführung ein Rückführventil umfaßt, das in Abhängigkeit von der gewünschten Diluatmenge und/oder der Ionenkonzentration I_{C} des Diluats einen bestimmten Teil des Konzentrats durch die Konzentratsrückführung leitet. Dadurch kann auch die Ionenkonzentration I_{C} auf einen konstanten Wert eingestellt werden.

Bei einer besonders bevorzugten Ausführungsform ist vorgesehen, dass die Pumpe als Plungerpumpe ausgebildet ist. Die Plungerpumpe weist praktisch überhaupt keine oder nur eine geringe Wärmeentwicklung auf, so dass dadurch auch das Wasser nicht erwärmt werden kann. Dadurch wird die Keimbildung verhindert oder zumindest unterdrückt. Weiterhin haben Plungerpumpen den Vorteil, dass sie kontinuierlich über einen großen Druckbereich von 0 bis 80 bar einstellbar sind. Mit Verwendung der Plungerpumpe lässt sich eine Umkehrosmose-Anlage bereitstellen, die auch ohne Druckregelungseinrichtung die oben genannten Probleme überwindet, die bei herkömmlichen Umkehrosmose-Anlagen auftreten.

Weitere Merkmale, Vorteile und Ausgestaltungen der Erfindung sind Gegenstand der Unteransprüche.

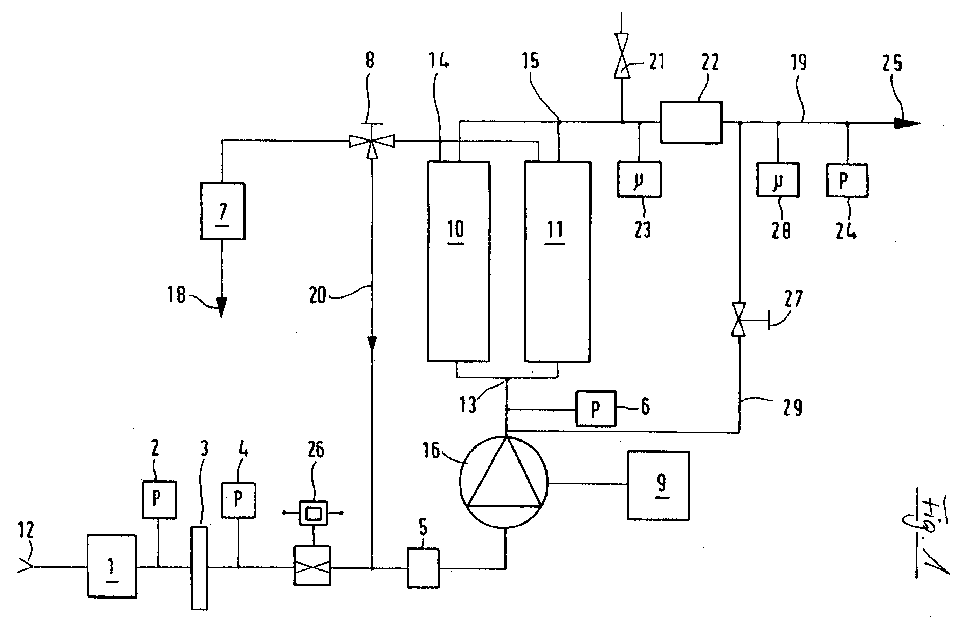

Eine bevorzugte Ausführungsform der Erfindung wird nachstehend anhand der beigefügten Zeichnung näher erläutert.

Die einzige Figur zeigt ein Blockschaltbild der bevorzugten Ausführungsform der erfindungsgemäßen Umkehrosmose-Anlage.

Die Umkehrosmose-Anlage weist einen Eingang 12 auf. Diesem Eingang 12 sind in Reihe eine Härtegrad-Überwachungseinrichtung 1, ein erster Drucksensor 2, ein Filter 3, ein zweiter Drucksensor 4, ein Magnetventil 26, ein Druckschalter 5 und eine Pumpe 16 nachgeschaltet. Dem Ausgang der Pumpe 16 ist ein dritter Drucksensor 6 zugeordnet. Weiterhin weist die Pumpe 16 einen Steuereingang auf, der mit einem Frequenzumwandler 9 gekoppelt ist. Der Ausgang der Pumpe ist mit einem Rohwassereingang 13 zweier parallel geschalteter Umkehrosmose-Module 10 und 11 gekoppelt. Die Umkehrosmose-Module 10 und 11 weisen außerdem einen Konzentratausgang 14 und einen Diluatausgang 15 auf. Dem Konzentratausgang 14 ist ein Regelventil 8 nachgeschaltet. Das Regelventil 8 weist zwei Ausgänge auf. Der eine Ausgang des Regelventils 8 ist über eine Rückführleitung 20 mit dem Koppelpunkt des Druckschalters 5 und des Magnetventils 26 verbunden. Der andere Ausgang des Regelventils 8 ist über einen Wasserzähler 7 mit einem Konzentratabfluß 18 verbunden. Dem Diluatausgang 15 sind ein Zapfhahn 21, ein erster Leitwertsensor 23, ein zweiter Wasserzähler 22, ein zweiter Leitwertsensor 28, ein vierter Drucksensor 24 und ein Diluatabfluß 25 nachgeschaltet, die über ein Diluatleitungssystem 19 verbunden sind. Das Diluatleitungssystem 19 ist über eine Überbrückungsleitung 29 mit dem Ausgang der Pumpe 16 verbunden. Die Überbrückungsleitung 29 weist ein zweites Regelventil 27 auf.

Über den Eingang 12 wird der Umkehrosmose-Anlage Rohwasser zugeführt, das üblicherweise in einer Enthärtungsanlage entkalkt worden ist. Die Härtegrad-Überwachungseinrichtung 1 ist dazu vorgesehen, den Härtegrad des Rohwassers zu erfassen, so daß bei Überschreitung eines vorbestimmten Grenzwertes die weitere Zufuhr von Rohwasser, beispielsweise durch Schließen des Magnetventils 26, automatisch oder manuell unterbunden werden kann. Vorzugsweise wird bei einer Überschreitung des Wertes 1° dH die Umkehrosmose-Anlage automatisch abgeschaltet. Auf diese Weise wird verhindert, daß Wasser mit einem höheren Härtegrad in die Umkehrosmose-Module 10 und 11 gelangt. Dies hätte zur Folge, daß die Umkehrosmose-Module 10 und 11 verstopft werden würden, und letztlich die gesamte Umkehrosmose-Anlage ausfallen würde. Durch die Verwendung der Härtegrad-Überwachungseinrichtung 1 wird der gesamte Wartungsaufwand der Anlage erheblich reduziert. Das Magnetventil 26 kann mit Abschalten der Anlage geschlossen werden, um beispielsweise ein Spülen der Anlage zu ermöglichen.

Die Pumpe 16 ist dazu vorgesehen, das Rohwasser mit Druck, je nach Bauart zwischen 1 und 80 bar, in die Umkehrosmose-Module 10 und 11 zu pressen. Die Pumpe 16 wird von dem Frequenzumwandler 9 angesteuert. Dem Frequenzumwandler 9 ist vorzugsweise ein DDC-Regler vorgeschaltet. Der Druck am Ausgang der Pumpe 16 wird in Abhängigkeit von denjenigen Werten geregelt, die durch den dritten Drucksensor 6, den zweiten Wasserzähler 22, den Leitwertsensor 23 und den vierten Drucksensor 24 erfasst werden. Auf diese Weise wird die Pumpe 16 derart geregelt, daß den Umkehrosmose-Modulen 10 und 11 soviel Rohwasser zugeführt wird, wie Diluat am Diluatabfluß 25 von einem Endverbraucher benötigt wird. Eine Zwischenlagerung des Diluats in einem Behälter oder dergleichen ist nicht erforderlich. Somit wird eine Keimbildung unterbunden, die oftmals in derartigen Behältern auftritt. Vorzugsweise sind die Umkehrosmose-Module 10 und 11 separat zu- und abschaltbar. Auf diese Weise kann in Abhängigkeit von der geforderten Diluatmenge, insbesondere bei noch mehr Modulen, die gesamte Anlage geregelt werden.

Das Regelventil 8 ist als 3-Wege-Ventil ausgebildet. Mit dem Regelventil 8 kann eingestellt werden, welcher Anteil des Konzentrats über die Rückführleitung 20 an den Vorlauf der Pumpe 16 rückgeführt wird. Beispielsweise kann das Regelventil 8 von einem DDC-Regler angesteuert werden. Der übrige Anteil des Konzentrats wird über den ersten Wasserzähler 7 dem Konzentratabfluß 18 zugeführt. Das dem Konzentratabfluß 18 zugeführte Konzentrat wird üblicherweise als Abfall verworfen. Durch die einstellbare Rückführung des Konzentrats werden die Regelungsmöglichkeiten der gesamten Umkehrosmose-Anlage erhöht. Insbesondere ist dadurch das Konzentrat stetig einstellbar.

Die Überbrückungsleitung 29 und das zweite Regelventil 27 bilden bei der hier beschriebenen Ausführungsform Bestandteile einer Verschneideeinrichtung. Dadurch werden insbesondere die Umkehrosmose-Module 10 und 11 überbrückt, so dass ein Teil des gefilterten Rohwassers direkt dem Diluatleitungssystem 19 und dem Diluatabfluss 25 zugeführt werden kann. Damit wird eine weitere Regelungsmöglichkeit für die Umkehrosmose-Anlage bereitgestellt. Ein Teil des gefilterten Rohwassers kann damit an den beiden Umkehrosmose-Modulen 10 und 11 vorbei dem Diluatabfluss 25 zugeführt werden, wenn vom Endverbraucher ein entsprechender vorbestimmter Salzgehalt toleriert wird. Vorzugsweise wird der aktuelle Leitwert des verschnittenen Diluats vom zweiten Leitwertsensor 28 erfasst. Je nach vom Endverbraucher tolerierten Salzgehalt kann dann mittels des Regelventils 27 das Verhältnis von aus den Umkehrosmose-Modulen 10 und 11 ausgegebenem Diluatfluss und des durch die Überbrückungsleitung 29 geführten gefilterten Rohwassers manuell oder automatisch eingestellt werden. Weiterhin kann es vorteilhaft sein, zusätzlich auch den aktuellen Leitwert des aus den Umkehrosmose-Modulen 10 und 11 ausgegebenen Diluats vor der Verschneidung mit gefiltertem Rohwasser im ersten Leitwertsensor 23 zu erfassen. Die Regelung kann dadurch verbessert werden, da anhand der Qualität des aus den Umkehrosmose-Modulen 10 und 11 ausgegebenen Diluats die mutmaßlich mögliche Zugabe von gefiltertem Rohwasser über die Überbrückungsleitung 29 abgeschätzt werden kann. Eine Überprüfung kann dann noch durch Bestimmung des Leitwerts des verschnittenen Diluats im zweiten Leitwertsensor 28 erfolgen. Dieses Verfahren ist besonders ökonomisch, da durch die beiden Umkehrosmose-Module 10 und 11 nicht mehr Wasser als nötig hindurch befördert wird. Dies wirkt sich günstig für die Wartungsintervalle der Umkehrosmose-Module 10 und 11 aus.

Mit der Verschneideeinrichtung wird eine weitere Möglichkeit geschaffen, den konstruktiven und technologischen Aufwand für die Umkehrosmose-Anlage optimal an die jeweils vorliegenden Anforderungen anzupassen. Die Überbrückungsleitung 29 und das zweite Regelungsventil 27 sind kostengünstige Bauteile, die außerdem einen geringen Wartungsaufwand erfordern. Durch die Verschneideeinrichtung kann die Durchflussrate der beiden Umkehrosmose-Module 10 und 11 wesentlich geringer sein als die der gesamten Umkehrosmose-Anlage.

Insbesondere ist vorgesehen, daß die Umkehrosmose-Anlage mit einer EDV-Anlage gekoppelt sein kann. Dabei werden die erfaßten Meßwerte sämtlicher Sensoren der EDV-Anlage zugeführt. Auf der Grundlage dieser Meßwerte werden der Frequenzumwandler 9 und das Regelventil 8 von der EDV-Anlage angesteuert. Auf diese Weise ist eine ständige Überwachung der Umkehrosmose-Anlage mittels der EDV-Anlage möglich. Ein Display der EDV-Anlage ist für die ständige optische Überwachung der wichtigsten Meßdaten vorgesehen. Eine permanente Aufzeichnung der erfaßten Meßwerte ist ebenfalls vorgesehen. Die EDV-Anlage läßt sich mittels eines PC kostengünstig realisieren. Beispielsweise kann auch eine SPS-Steuerung verwendet werden. Sämtliche Daten und eventuelle Störfälle können unmittelbar und unverzüglich an eine Leitstelle weitergeleitet werden. Weiterhin sei darauf hingewiesen, daß die erfindungsgemäße Anlage einen sehr geringen Platzbedarf hat. Schließlich kann mit dieser Anlage die für Keimbildung relevante DIN 6022 problemlos eingehalten werden. Auch die gemäss der Trinkwasserverordnung relevante DIN 2000, die ebenfalls die Keimbildung betrifft, kann mit der erfindungsgemäßen Umkehrosmose-Anlage erfüllt werden.

Bei Verwendung einer Plungerpumpe 16 wird die Keimbildung zusätzlich unterdrückt. Dies ist darauf zurückzuführen, dass bei der Plungerpumpe 16 die Wärmeentwicklung nur gering oder praktisch gar nicht vorhanden ist. Dadurch wird das Wasser auch nicht zusätzlich aufgeheizt.

Die erfindungsgemäße Umkehrosmose-Anlage kann in der Industrie verwendet werden. Für zahlreiche Herstellungsverfahren und Produkte wird Wasser mit einem niedrigen Salzgehalt benötigt. Insbesondere für die Pharma-Industrie ist diese Umkehrosmose-Anlage vorteilhaft geeignet. Neben dem extrem niedrigen Salzgehalt ist auch die Keimbildung sehr gering, was insbesondere für pharmazeutische Produkte wichtig ist. Auch in Krankenhäusern kann die erfindungsgemäße Umkehrosmose-Anlage verwendet werden, wo ebenfalls die niedrige Keimbildung neben dem niedrigen Salzgehalt eine wichtige Rolle spielt. Schließlich kann die erfindungsgemäße Umkehrosmose-Anlage als Meerwasser-Aufbereitungsanlage verwendet werden, so dass auf diese Weise Trinkwasser gewonnen werden kann. In Küstenregionen, die nur geringes Süßwasservorkommen aufweisen, kann die erfindungsgemäße Umkehrosmose-Anlage besonders effizient für die Bereitstellung von Trinkwasser verwendet werden.

### Bezugszeichenliste

- 1: Härtegrad-Überwachungseinrichtung
- 2: Erster Drucksensor
- 3: Filter
- 4: Zweiter Drucksensor
- 5: Druckschalter
- 6: Dritter Drucksensor
- 7: Erster Wasserzähler
- 8: Erstes Regelventil
- 9: Frequenzumwandler
- 10: Umkehrosmose-Modul
- 11: Umkehrosmose-Modul
- 12: Eingang
- 13: Rohwassereingang
- 14: Konzentratausgang
- 15: Diluatausgang
- 16: Pumpe
- 18: Konzentratabfluß
- 19: Diluatleitungssystem
- 20: Rückführleitung
- 21: Zapfhahn
- 22: Zweiter Wasserzähler
- 23: Erster Leitwertsensor
- 24: Vierter Drucksensor
- 25: Diluatabfluß
- 26: Magnetventil
- 27: Zweites Regelventil
- 28: Zweiter Leitwertsensor
- 29: Überbrückungsleitung

## Patentansprüche

1. Umkehrosmose-Anlage für Rohwasser, insbesondere Stadt- oder Brunnenwasser, zur Gewinnung von salzarmem Diluat oder Permeat, umfassend
- wenigstens ein Umkehrosmose-Modul (10, 11) mit einem Rohwassereingang (13), einem Konzentratausgang (14) sowie einem Diluatausgang (15),
- eine das wenigstens eine Umkehrosmose-Modul (10, 11) mit dem Rohwasser beaufschlagende Pumpe (16)
wobei
an der Pumpe (16) oder zwischen Pumpe (16) und Rohwassereingang (13) eine Druckregelungseinrichtung (9) vorgesehen ist,
die Druckregelungseinrichtung (9) einen Rohwasserdruck P_{R} in Abhängigkeit von einem vorbestimmten Diluatdruck P_{D} am Diluatausgang (15) einstellt, wobei der vorbestimmte Diluatdruck P_{D} an die Anforderungen nachschaltbarer Verbraucher anpassbar ist, **dadurch gekennzeichnet, dass**
die Umkehrosmose-Anlage eine Überbrückungsleitung (29) mit einem Regelventil (27) umfasst, welche zwischen dem Ausgang der Pumpe (16) und einem Diluatleitungssystem (19) zum Zuführen eines Teiles des Rohwassers direkt an das Diluatleitungssystem (19) entsprechend eines vom Endverbraucher tolerierten Salzgehaltes geschaltet ist, und dem Diluatausgang (15) und der Überbrückungsleitung (29) ein Diluatabfluss (25) mit zugeordnetem Leitwertsensor (28) nachgeschaltet ist, wobei das Regelventil (27) in Abhängigkeit von einem vom Leitwertsensor (28) erfassten Leitwert gesteuert ist.

2. Umkehrosmose-Anlage für Rohwasser, insbesondere Stadt- oder Brunnenwasser, zur Gewinnung von salzarmem Diluat oder Permeat, umfassend
- wenigstens ein Umkehrosmose-Modul (10, 11) mit einem Rohwassereingang (13), einem Konzentratausgang (14) sowie einem Diluatausgang (15),
- eine das wenigstens eine Umkehrosmose-Modul (10, 11) mit dem Rohwasser beaufschlagende Pumpe (16)
wobei
an der Pumpe (16) oder zwischen Pumpe (16) und Rohwassereingang (13) eine Druckregelungseinrichtung (9) vorgesehen ist, an dem Ausgang der Pumpe (16) ein Drucksensor (6) vorgesehen ist,
dem Diluatausgang (15) ein Wasserzähler (22), ein Leitwertsensor (23) sowie ein weiterer Drucksensor (24) nachgeschaltet ist, und
die Druckregelungseinrichtung (9) einen Rohwasserdruck P_{R} in Abhängigkeit von von den Messwerten regelt, die durch den Drucksensor (6), den Wasserzähler (22), den Leitwertsensor (23) und den weiteren Drucksensor (24) erfasst werden, wobei der vorbestimmte Diluatstrom an die Anforderungen nachschaltbarer Verbraucher anpassbar ist, und
die Umkehrosmose-Anlage eine Überbrückungsleitung (29) mit einem Regelventil (27) umfasst, welche zwischen dem Ausgang der Pumpe (16) und einem Diluatleitungssystem (19) zum Zuführen eines Teiles des Rohwassers direkt an das Diluatleitungssystem (19) entsprechend eines vom Endverbraucher tolerierten Salzgehaltes geschaltet ist, und dem Diluatausgang (15) und der Überbrückungsleitung (29) ein Diluatabfluss (25) mit zugeordnetem zweiten Leitwertsensor (28) nachgeschaltet ist, wobei das Regelventil (27) in Abhängigkeit von einem vom zweiten Leitwertsensor (28) erfassten Leitwert gesteuert ist.

3. Umkehrosmose-Anlage nach Anspruch 2,
**dadurch gekennzeichnet, dass**
die Umkehrosmoseanlage mit einer EDV-Anlage, der die erfassten Messwerte sämtlicher Sensoren zugeführt werden, gekoppelt ist,
auf der Grundlage dieser Messwerte die Druckregelungseinrichtung (9) angesteuert wird.

4. Umkehrosmose-Anlage nach einem der Ansprüche 1 bis 3,
**dadurch gekennzeichnet, dass**
die Druckregelungseinrichturig einen Frequenzumwandler (9) zur Ansteuerung der Pumpe (16) umfaßt, derart, dass die Pumpe (16) über einen kontinuierlichen Druckbereich, insbesondere von 1 bis 80 bar einstellbar ist.

5. Umkehrosmose-Anlage nach einem der Ansprüche 2 bis 4,
**dadurch gekennzeichnet, dass**
der weitere Drucksensor (24) an dem abstromseitig zum Diluatausgang (15) angeordneten Diluat-Leitungssystem (19) vorgesehen ist.

6. Umkehrosmose-Anlage nach einem der Ansprüche 1 bis 5,
**dadurch gekennzeichnet, dass**
die Umkehrosmose-Anlage am Eingang (12) eine Härtegrad-Überwachungseinrichtung (1) aufweist, um die Rohwasserzufuhr bei Überschreitung eines vorbestimmten Härtegrade zu stoppen.

7. Umkehrösmose-Anlage nach einem der Ansprüche 1 bis 6,
**dadurch gekennzeichnet, dass**
die Umkehrosmose-Module (10, 11) separat zu- und abschaltbar sind.

8. Umkehrosmose-Anlage nach einem der Ansprüche 1 bis 7,
**dadurch gekennzeichnet, dass**
eine Konzentratrückführung (20) vorgesehen ist, um das am Konzentratausgang (14) austretende Konzentrat ganz oder teilweise erneut durch das Umkehrosmose-Modul (10, 11) zu führen.

9. Umkehrosmose-Anlage nach Anspruch 8,
**dadurch gekennzeichnet, dass**
die Konzentratrückführung (20) ein Dreiwegeventil als Regelventil (8) umfasst, das je nach der im Diluat erreichten Ionenkonzentration Ic einen bestimmten_{.} Teilbetrag des Konzentrats durch die Konzentratrückführung (20) leitet.

10. Umkehrosmose-Anlage nach Anspruch 1, 4 oder 6-9,
**dadurch gekennzeichnet, dass**
dem Diluatausgang (15) ein erster Leitwertsensor (23) zugeordnet ist.

11. Umkehrosmose-Anlage nach einem der Ansprüche 1 bis 10,
**dadurch gekennzeichnet, dass**
die Pumpe (16) als Plungerpumpe ausgebildet ist.

12. Umkehrosmose-Anlage nach Anspruch 11,
**dadurch gekennzeichnet, dass**
die Plungerpumpe (16) drei Kolben oder ein Vielfaches von drei Kolben aufweist.

13. Umkehrosmose-Anlage nach Anspruch 11 oder 12,
**dadurch gekennzeichnet, dass**
die Plungerpumpe (16) für eine Anzahl von 0 bis 2800 Hubbewegungen pro Minute vorgesehen ist.

14. Umkehrosmose-Anlage nach einem der Ansprüche 11 bis 13,
**dadurch gekennzeichnet, dass**
die Plungerpumpe (16) über einen kontinuierlichen Druckbereich, insbesondere von 1 bis 80 bar, vorzugsweise von 1 bis 40 bar einstellbar ist.

## Claims

1. A reverse osmosis installation for raw water, in particular urban water or well water, for recovering low-salt diluate or permeate, comprising
- at least one reverse osmosis module (10, 11) including a raw water inlet (13), a concentrate outlet (14), and a diluate outlet (15),
- a pump (16) supplying the at least one reverse osmosis module (10, 11) with raw water,
wherein a pressure regulation means (9) being provided at the pump (16) or between the pump (16) and the raw water inlet (13),
the pressure regulation means (9) adjusting a raw water pressure P_{R} as a function of a predetermined diluate pressure P_{D} at the diluate outlet (15), the predetermined diluate pressure P_{D} being adaptable to the requirements of consumers that may be connected downstream,
**characterized in that**
the reverse osmosis installation comprises a bridging line (29) including a control valve (27), which bridging line is connected between the outlet of the pump (16) and a diluate line system (19) for feeding a part of the raw water directly to the diluate line system (19) according to a salt content tolerated by the end consumer, and a diluate outlet (25) including an associated conductance sensor (28) is connected downstream of the diluate outlet (15) and the bridging line (29), the control valve (27) being controlled as a function of a conductance detected by the conductance sensor (28).

2. A reverse osmosis installation for raw water, in particular urban water or well water, for recovering low-salt diluate or permeate, comprising
- at least one reverse osmosis module (10, 11) including a raw water inlet (13), a concentrate outlet (14), and a diluate outlet (15),
- a pump (16) supplying the at least one reverse osmosis module (10, 11) with raw water,
wherein a pressure regulation means (9) being provided at the pump (16) or between the pump (16) and the raw water inlet (13), and a pressure sensor (6) being provided at the outlet of the pump (16),
a water-meter (22), a conductance sensor (23), and a further pressure sensor (24) being connected downstream of the diluate outlet (15), and
the pressure regulation means (9) regulating a raw water pressure P_{R} as a function of the measured values detected by the pressure sensor (6), the water-meter (22), the conductance sensor (23) and the further pressure sensor (24), the predetermined diluate flow being adaptable to the requirements of consumers that can be connected downstream, and
the reverse osmosis installation comprising a bridging line (29) including a control valve (27), which bridging line is connected between the outlet of the pump (16) and a diluate line system (19) for feeding a part of the raw water directly to the diluate line system (19) according to a salt content tolerated by the end consumer, and a diluate outlet (25) including an associated second conductance sensor (28) being connected downstream of the diluate outlet (15) and the bridging line (29), the control valve (27) being controlled as a function of a conductance detected by the second conductance sensor (28).

3. The reverse osmosis installation according to claim 2,
**characterized in that**
the reverse osmosis installation is coupled with an EDP-system, which is supplied with the detected measured values from all of the sensors,
the pressure regulation means (9) is driven on the basis of these measured values.

4. The reverse osmosis installation according to any one of claims 1 to 3,
**characterized in that**
the pressure regulation means comprises a frequency transformer (9) for driving the pump (16) such that the pump (16) is adjustable over a continuous pressure range, in particular from 1 to 80 bar.

5. The reverse osmosis installation according to any one of claims 2 to 4,
**characterized in that**
the further pressure sensor (24) is provided at the diluate line system (19) arranged on the downstream side of the diluate outlet (15).

6. The reverse osmosis installation according to any one of claims 1 to 5,
**characterized in that**
the reverse osmosis installation cpmprises a hardness degree monitoring means (1) at the inlet (12) for stopping the raw water supply when a predetermined hardness degree is exceeded.

7. The reverse osmosis installation according to any one of claims 1 to 6,
**characterized in that**
the reverse osmosis modules (10, 11) may be separately connected and disconnected.

8. The reverse osmosis installation according to any one of claims 1 to 7,
**characterized in that**
a concentrate recirculation (20) is provided for recirculating the concentrate exiting the concentrate outlet (14) entirely or partly through the reverse osmosis module (10, 11).

9. The reverse osmosis installation according to claim 8,
**characterized in that**
the concentrate recirculation (20) comprises a three-way valve as the control valve (8) guiding a certain partial amount of the concentrate recirculation (20) in dependence on the ion concentration Ic reached within the diluate.

10. The reverse osmosis installation according to claim 1, 4 or 6 to 9,
**characterized in that**
a first conductance sensor (23) is associated to the diluate outlet (15).

11. The reverse osmosis installation according to any one of claims 1 to 10,
**characterized in that**
the pump (16) is configured to be a plunger pump.

12. The reverse osmosis installation according to claim 11,
**characterized in that**
the plunger pump (16) comprises three plungers or a multiple of three plungers.

13. The reverse osmosis installation according to claim 11 or 12,
**characterized in that**
the plunger pump (16) is provided for a number of 0 to 2800 strokes per minute.

14. The reverse osmosis installation according to any one of claims 11 to 13,
**characterized in that**
the plunger pump (16) is adjustable over a continuous pressure range, in particular from 1 to 80 bar, preferably from 1 to 40 bar.

## Revendications

1. Installation d'osmose inverse destinée à de l'eau brute, en particulier de l'eau de ville ou de puits, permettant la récupération de diluat ou de perméat pauvre en sels, comprenant :
- au moins un module d'osmose inverse (10, 11) présentant une entrée d'eau brute (13), une sortie de concentré (14) ainsi qu'une sortie de diluat (15),
- une pompe (16) alimentant ledit au moins un module d'osmose inverse (10, 11) en eau brute,
un dispositif de régulation de pression (9) étant prévu sur la pompe (16) ou entre la pompe (16) et l'entrée d'eau brute (13),
le dispositif de régulation de pression (9) réglant une pression d'eau brute P_{R} en fonction d'une pression de diluat prédéfinie P_{D} à la sortie de diluat (15), la pression de diluat prédéfinie P_{D} pouvant être adaptée aux besoins de consommateurs pouvant être connectés en aval,
**caractérisée en ce que**
l'installation d'osmose inverse comporte une conduite de dérivation (29) munie d'une vanne de régulation (27), et située entre la sortie de la pompe (16) et un système de canalisation de diluat (19) pour amener une partie de l'eau brute directement au système de canalisation de diluat (19) en fonction d'une teneur en sels tolérée par le consommateur final, et **en ce qu'**un écoulement de diluat (25) muni d'un capteur de conductance dédié (28) est placé en aval de la sortie de diluat (15) et de la conduite de dérivation (29), la vanne de régulation (27) étant pilotée en fonction d'une conductance saisie par le capteur de conductance (28).

2. Installation d'osmose inverse destinée à de l'eau brute, en particulier de l'eau de ville ou de puits, permettant la récupération de diluat ou de perméat pauvre en sels, comprenant :
- au moins un module d'osmose inverse (10, 11) présentant une entrée d'eau brute (13), une sortie de concentré (14) ainsi qu'une sortie de diluat (15),
- une pompe (16) alimentant ledit au moins un module d'osmose inverse (10, 11) en eau brute,
un dispositif de régulation de pression (9) étant prévu sur la pompe (16) ou entre la pompe (16) et l'entrée d'eau brute (13), un capteur de pression (6) étant prévu à la sortie de la pompe (16),
un compteur d'eau (22), un capteur de conductance (23) ainsi qu'un autre capteur de pression (24) étant placés en aval de la sortie de diluat (15), et
le dispositif de régulation de pression (9) régulant une pression d'eau brute P_{R} en fonction des valeurs de mesure qui sont saisies par le capteur de pression (6), le compteur d'eau (22), le capteur de conductance (23) et l'autre capteur de pression (24), le débit prédéfini de diluat pouvant être adaptée aux besoins de consommateurs pouvant être connectés en aval, et
l'installation d'osmose inverse comportant une conduite de dérivation (29) munie d'une vanne de régulation (27), et située entre la sortie de la pompe (16) et un système de canalisation de diluat (19) pour amener une partie de l'eau brute directement au système de canalisation de diluat (19) en fonction d'une teneur en sels tolérée par le consommateur final, et un écoulement de diluat (25) muni d'un second capteur de conductance dédié (28) étant placé en aval de la sortie de diluat (15) et de la conduite de dérivation (29), la vanne de régulation (27) étant pilotée en fonction d'une conductance saisie par le second capteur de conductance (28).

3. Installation d'osmose inverse selon la revendication 2,
**caractérisée en ce que**
l'installation d'osmose inverse est connectée à un système informatique auquel sont transmises les valeurs de mesure saisies par tous les capteurs,
le dispositif de régulation de pression (9) étant commandé sur la base de ces valeurs de mesure.

4. Installation d'osmose inverse selon l'une des revendications 1 à 3,
**caractérisée en ce que**
le dispositif de régulation de pression comporte un convertisseur de fréquence (9) destiné à commander la pompe (16) de telle façon que la pompe (16) est réglable sur une plage de pression continue, en particulier de 1 à 80 bars.

5. Installation d'osmose inverse selon l'une des revendications 2 à 4,
**caractérisée en ce que**
l'autre capteur de pression (24) est prévu sur le système de canalisation de diluat
(19) disposé en aval de la sortie de diluat (15).

6. Installation d'osmose inverse selon l'une des revendications 1 à 5,
**caractérisée en ce que**
l'installation d'osmose inverse présente à l'entrée (12) un dispositif de surveillance de degré de dureté (1) destiné à arrêter l'arrivée d'eau brute en cas de dépassement d'un degré de dureté prédéfini.

7. Installation d'osmose inverse selon l'une des revendications 1 à 6,
**caractérisée en ce que**
les modules d'osmose inverse (10, 11) peuvent être mis en circuit ou hors circuit séparément.

8. Installation d'osmose inverse selon l'une des revendications 1 à 7,
**caractérisée en ce que**
une conduite de retour de concentré (20) est prévue pour faire repasser tout ou partie du concentré qui sort à la sortie de concentré (14) par le module d'osmose inverse (10, 11).

9. Installation d'osmose inverse selon la revendication 8,
**caractérisée en ce que**
la conduite de retour de concentré (20) comporte une vanne à trois voies comme vanne de régulation (8), qui achemine une quantité partielle définie du concentré par la conduite de retour de concentré (20) en fonction de la concentration ionique Ic atteinte dans le diluat.

10. Installation d'osmose inverse selon l'une des revendications 1, 4 ou 6 à 9,
**caractérisée en ce que**
un premier capteur de conductance (23) est dédié à la sortie de diluat (15).

11. Installation d'osmose inverse selon l'une des revendications 1 à 10,
**caractérisée en ce que**
la pompe (16) est conçue comme pompe à pistons plongeurs.

12. Installation d'osmose inverse selon la revendication 11,
**caractérisée en ce que**
la pompe à pistons plongeurs (16) présente trois pistons ou un multiple de trois pistons.

13. Installation d'osmose inverse selon la revendication 11 ou 12,
**caractérisée en ce que**
la pompe à pistons plongeurs (16) est prévue pour un nombre de 0 à 2800 courses par minute.

14. Installation d'osmose inverse selon l'une des revendications 11 à 13,
**caractérisée en ce que**
la pompe à pistons plongeurs (16) est réglable sur une plage de pression continue, en particulier de 1 à 80 bars, de préférence de 1 à 40 bars.
